# EUROPEAN PATENT APPLICATION

(11) **EP 4 624 074 A1**
(43) Date of publication of application: **01.10.2025**
(21) Application number: 24219023.9
(22) Date of filing: 11.12.2024
(51) Int. Cl.: B22F 10/14, B22F 3/10, B22F 10/64, B28B 1/00

(54) **ADDITIVE MANUFACTURING SUPPORTS AND METHODS FOR USING SAME IN ADDITIVELY MANUFACTURING PARTS**

(30) Priority: 09.01.2024 US 202418407984
(71) Applicant: General Electric Company, Cincinnati, Ohio 45215 (US)
(72) Inventor: DILGER, Elliot C., Evendale, OH 45215 (US); SHIVANATHAN, Sivaruban, Evendale, OH 45215 (US); NATARAJAN, Arunkumar, Evendale, OH 45215 (US); PENDURTI, Srinivas, Evendale, OH 45215 (US); STEWART, Lonnie R., Evendale, OH 45215 (US)
(74) Representative: Hafner & Kohl PartmbB

(57) **Abstract**

An additive manufacturing support (202a) including a wax form (204a) comprising a first surface (208a) and a second surface (210a) that is opposite the first surface (208a) and at least one ceramic support (206a) embedded in the wax form (204a). A method of additively manufacturing a part (100) including forming a green body part (200a) and positioning the green body part (200a) on the additive manufacturing support (202a). The green body part (200a) is heated above a first temperature to remove the binder, thereby forming a brown body part. The brown body part is heated above a second temperature to sinter, thereby forming a consolidated part.

## Description

### FIELD

The subject matter disclosed herein relates to additive manufacturing and, more specifically, to additive manufacturing supports for binder jet additive manufactured articles.

### BACKGROUND

Additive manufacturing, also known as 3D printing, generally involves printing an article one layer at a time using specialized systems. In particular, a layer of a material (e.g., a metal powder bed) may be deposited on a working surface and bonded with another layer of the same or a different material. Additive manufacturing may be used to manufacture articles (e.g., fuel nozzles, fuel injectors, turbine blades, etc.) from computer aided design (CAD) models using techniques such as, but not limited to, metal laser melting, laser sintering, and binder jetting. These additive manufacturing techniques melt, sinter, or chemically bind layers of material to generate the desired article. Additive manufacturing may facilitate manufacturing of complex articles and enable flexibility for customization of articles compared to techniques such as molding (e.g., cast molding, injection molding). Additionally, additive manufacturing can reduce the overall manufacturing costs associated with generating these complex articles compared to molding techniques generally used.

### BRIEF DESCRIPTION OF THE DRAWINGS

FIG. 1 is a flow diagram of an embodiment of a method of manufacturing a consolidated part via an additive manufacturing process using an additive manufacturing support, according to one or more embodiments described herein;
FIG. 2 is a block diagram of an embodiment of an additive manufacturing apparatus used to manufacture the consolidated part in accordance with the method of FIG. 1;
FIG. 3 is a schematic diagram of an embodiment of a layer of particulate material from which the consolidated part is manufactured resulting from the acts of the method of FIG. 1;
FIG. 4 is a cross-sectional view of an embodiment of a printed layer having particles coated with a binder in accordance with the method of FIG. 1;
FIG. 5 is a top view of an embodiment of the printed layer shown in FIG. 4 having the binder selectively deposited in a pattern representative of a structure of the part in accordance with the method of FIG. 1;
FIG. 6 is a side, schematic view of an embodiment of a green body part positioned on an additive manufacturing support, according to one or more embodiments described herein;
FIG. 7 is a side, schematic view of another embodiment of a green body part positioned on an additive manufacturing support, according to one or more embodiments described herein;
FIG. 8 is a side, schematic view of another embodiment of a green body part positioned on an additive manufacturing support, according to one or more embodiments described herein;
FIG. 9 is a side, schematic view of another embodiment of a green body part positioned on an additive manufacturing support, according to one or more embodiments described herein;
FIG. 10 is a side, schematic view of another embodiment of a green body part positioned on an additive manufacturing support, according to one or more embodiments described herein;
FIG. 11 is a side, schematic view of another embodiment of a green body part positioned on an additive manufacturing support, according to one or more embodiments described herein;
FIG. 12 is a side, schematic view of another embodiment of a green body part positioned on an additive manufacturing support, according to one or more embodiments described herein; and
FIG. 13 is a side, schematic view of another embodiment of a green body part positioned on an additive manufacturing support, according to one or more embodiments described herein.

### DETAILED DESCRIPTION

One or more specific embodiments will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements. Furthermore, any numerical examples in the following discussion are intended to be non-limiting, and thus additional numerical values, ranges, and percentages are within the scope of the disclosed embodiments. The term "approximately" is meant to include any unintended variations from a stated value that occur as a result of engineering and manufacturing limitations.

The term "debinding," as used herein, refers to heating the green body part above a first temperature such that thermolysis of the binder into small oligomers occurs and at least a portion of the thermoplastic binder is removed, thereby forming a brown body part.

The term "sintering," as used herein, refers to heating the brown body part above a second temperature to remove a remaining portion of the thermoplastic binder (e.g., oligomeric residue and thermolytic byproducts formed during debinding) and consolidate the particulate material, thereby forming a consolidated part.

The phrase "green body part," as used herein, refers to a printed part that has not undergone heat treatment to remove the binder.

The phrase "brown body part," as used herein, refers to a printed part that has undergone a debind heat treatment to remove at least a portion of the binder by thermolytic decomposition.

The phrase "thermoplastic binder," as used herein, refers to a binder that includes one or more polymer strands having functional groups that may interact with one another via weak non-covalent forces (e.g., interactions, bonds) to link, or otherwise couple, strands of each respective thermoplastic polymer to one another.

There are several techniques for manufacturing articles, such as metal or ceramic parts used in a variety of machinery. For example, molding techniques such as sand molding, cast molding, and/or injection molding, among others, may be used to manufacture the parts. As noted above, other techniques that may be used to manufacture parts include additive manufacturing. For example, additive manufacturing techniques that may be used to manufacture articles include, but are not limited to, laser melting, laser sintering, and binder jetting. Additive manufacturing may be advantageous for fabricating parts compared to molding techniques due, in part, to the flexibility of materials that may be used, the ability to manufacture complex articles, and low manufacturing costs.

Unlike laser melting and laser sintering additive manufacturing techniques, which heat the material to consolidate and build layers of the material to form a metal or ceramic part, binder jetting uses a chemical binder to bond particles of the material into layers that form a green body of the part. The green body part may be further processed (e.g., sintered) to consolidate the layers and form the consolidated part. Bonding layers of material using a chemical binder has been used in sand molding techniques to bond sand particles and form a sand mold that can be used to fabricate other parts. Similar to sand molding, in binder jet printing, the chemical binder is successively deposited into layers of powder to print the part. For example, the chemical binder (e.g., a polymeric adhesive) may be selectively deposited onto a powder bed in a pattern representative of a layer of the part being printed. Each printed layer may be cured (e.g., via heat, light, moisture, solvent evaporation, etc.) after printing to bond the particles of each layer together to form the green body part. After the green body part is fully formed, the chemical binder is removed during post-printing processes (e.g., debinding and sintering). It may be appreciated that such debinding and sintering steps are not part of sand molding processes, in which the chemical binder remains an integral part of the sand mold, even as the sand mold is subsequently used to form a molded part. However, in binder jet 3D printing, the chemical binder is an integral part of the green body part (e.g., the chemical binder is disposed within and in between each layer of the printed part), and is subsequently removed during debinding and/or sintering to form a completed 3D printed part. It may also be noted that binder jet printing enables the manufacture of parts having complex, 3D geometries that are impossible or impractical to manufacture using a sand molding manufacturing process.

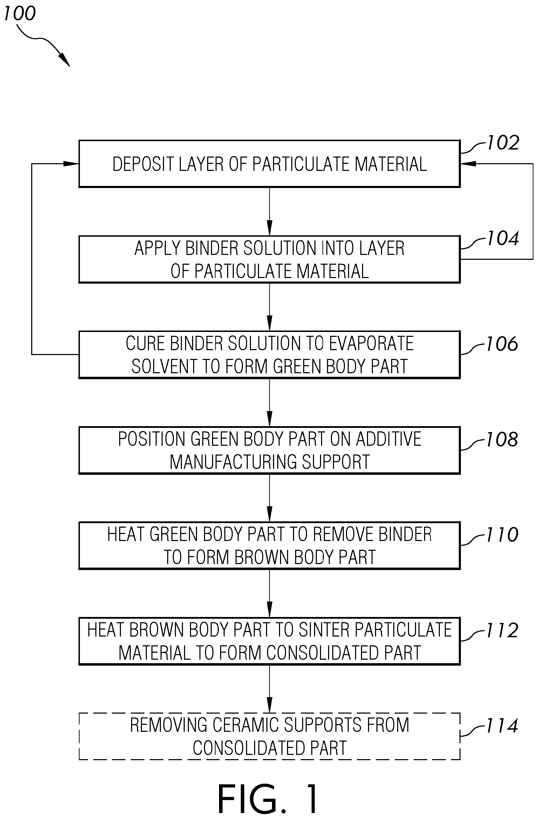

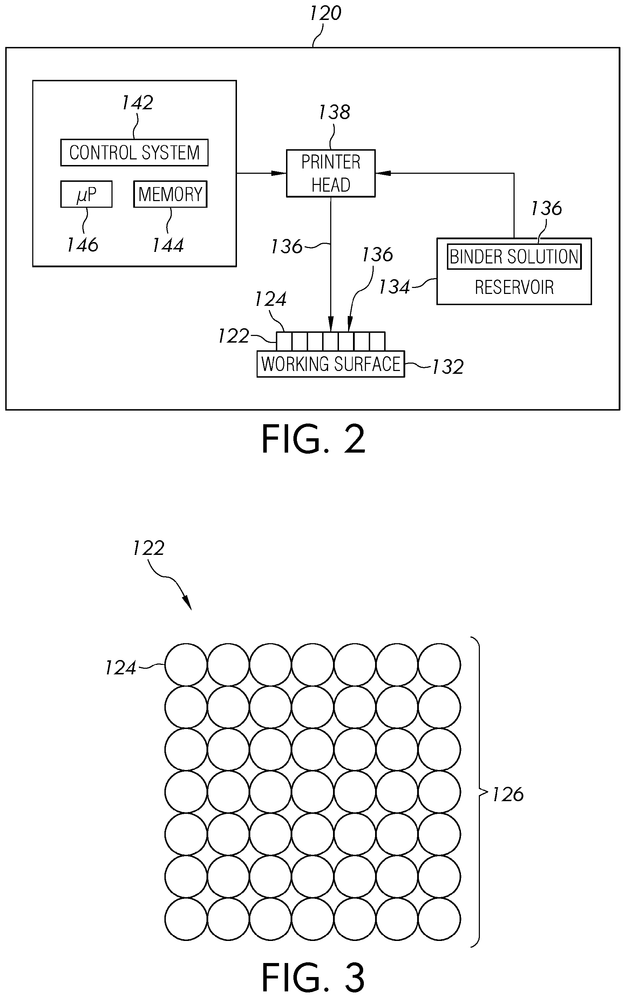

With the foregoing in mind, referring now to FIG. 1, a method of additively manufacturing a part is shown at 100. To facilitate discussion of aspects of the method 100, reference is also made to FIG. 2, which is a block diagram depicting an embodiment of an additive manufacturing apparatus 120 that may be used to perform the method 100. The method 100 begins at block 102 with depositing a layer 122 of a particulate material 124 (e.g., creating a powder bed), as shown in FIG. 3, on a working surface 132. In embodiments, the layer 122 may have a thickness 126 greater than or equal to 10 microns (µm) and less than or equal to 200 µm. The particulate material 124 used to print the part may vary depending on the type of part and the end use of the part.

For example, the particulate material 124 may include a metal particulate material, such as a nickel alloy (e.g., Inconel 625, Inconel 718, Rene'108, Rene'80, Rene' 142, Rene'195, and Rene'M2, Marm-247), a cobalt alloy (e.g., Hans 188, L605, X40, X45, and FSX414), a cobalt-chromium alloy, a titanium alloy, an aluminum alloy, a tungsten alloy, a stainless steel alloy (e.g., SS316L, SS304, Alloy Steel 8620, Alloy Steel 4140, Alloy 17-4PH, Stainless Steel 300 Series, Stainless Steel 400 Series), copper, a copper-nickel alloy, or a combination thereof. In embodiments, the metal particulate material may comprise particles having a particle size distribution greater than or equal to 1 microns (µm) and less than or equal to 75 µm. Such particulate materials may be used to print metal articles including, by way of example and not limitation, fuel tips, fuel nozzles, shrouds, micro mixers, or turbine blades.

In embodiments, the particulate material 124 may include a ceramic particulate material, such as alumina, aluminum nitride, zirconia, titania, silica, silicon nitride, silicon carbide, boron nitride, or a combination thereof. In embodiments, the ceramic particulate material may comprise particles having a particle size distribution greater than or equal to 0.1 µm to less than and equal to 100 µm. Such particulate materials may be used to print ceramic articles for use in, by way of example and not limitation, the medical and transportation industries.

Referring back to FIG. 1 at block 104, following the deposition of particulate material 124, the method 100 continues with selectively depositing a binder solution into a portion of the layer 122 of particulate matter 124 according to a pattern. For example, the binder solution may be selectively printed into the layer 122 of particulate material 124 using a printer head 138 that is operated by a control system 142 based on a CAD design that includes a representation of a layer of the consolidated part being printed.

For example, as shown in FIG. 2, the additive manufacturing apparatus 120 may be a binder jet printer that selectively deposits the binder solution into the layer 122 of particulate matter 124 according to the acts of block 104 (FIG. 1). In embodiments, the additive manufacturing apparatus 120 may include a working surface 132 that supports the layer 122 of particulate material 124, a reservoir 134 that stores a binder solution 136, and a printer head 138 that is fluidly coupled to the reservoir 134. The printer head 138 selectively deposits the binder solution 136 into the layer 122 of particulate material 124 to print the binder solution 136 onto and into the layer 122 of particulate matter 124 in a pattern that is representative of a layer of the consolidated part being printed. In embodiments, the additive manufacturing apparatus 120 may include a control system 142 for controlling operation of the additive manufacturing apparatus 120. The control system 142 may include a distributed control system (DCS) or any computer-based workstation that is fully or partially automated. In embodiments, the control system 142 may be any suitable device employing a general purpose computer or an application-specific device, which may generally include memory circuitry 144 storing one or more instructions for controlling operation of the additive manufacturing apparatus 120 and a processor. The memory circuitry 144 may store CAD designs representative of a structure of the consolidated part being printed. The processor may include one or more processing devices (e.g., microprocessor 146), and the memory circuitry 144 may include one or more tangible, non-transitory, machine-readable media collectively storing instructions executable by the processer to control actions described herein.

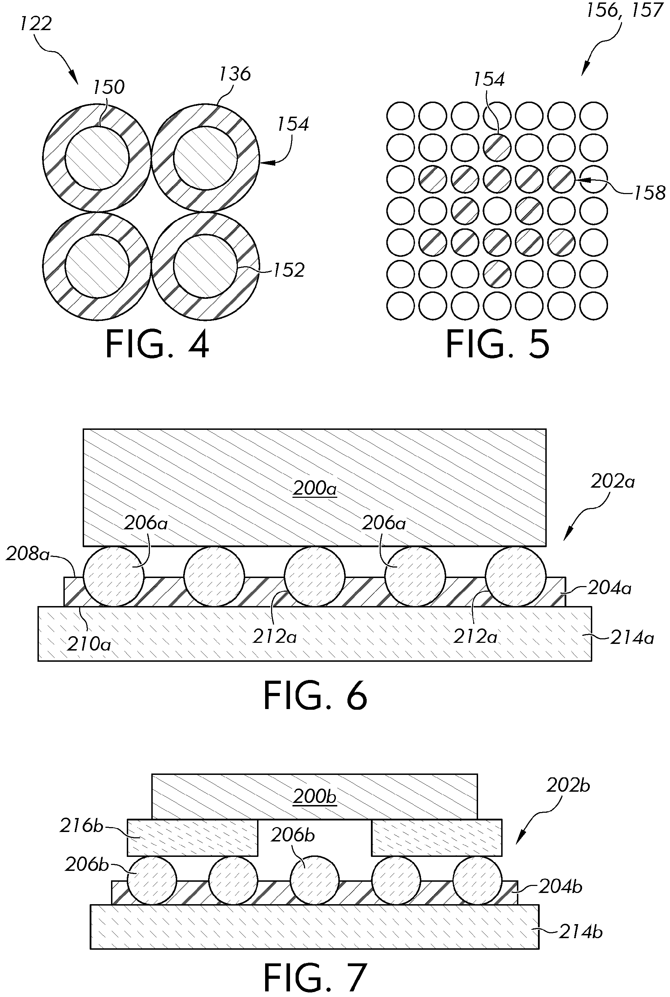

As discussed above, the binder solution 136 is selectively deposited into the layer 122 of particulate material 124 in a pattern representative of the structure of the part being printed. FIG. 4 is a cross-sectional view of a portion of the layer 122 of particular material 124 after deposition of the binder solution 136. As illustrated, the binder solution 136 coats an outer surface 150 of particles 152, thereby generating binder-coated particles 154. The binder solution 136 bonds the binder-coated particles 154 according to the pattern printed into the layer 122 of particular material 124 to form a layer of the green body part after curing. For example, FIG. 5 is a top view of a printed layer 156 of a part 157 having the binder-coated particles 154 bonded to one another in a pattern 158 that is representative of the layer of the part being printed.

The method 100 may repeat the acts of blocks 102 and 104 to continue building up the part in a layer-by-layer manner until a desired number of layers 122 of particulate matter 124 have been printed. The binder of the binder solution 136 bonds each successive layer 122 of particulate matter 124 and provides a certain degree of strength (e.g., green strength) to the printed part such that the integrity of the structure of the printed green body part is maintained during post-printing processes (e.g., transferring, inspecting, depowdering). That is, the green strength provided by the binder of the binder solution 136 maintains bonding between the particles of the particulate material 124 within the layers 122 and blocks (e.g., resists, prevents) delamination of the layers 122 during handling and post-printing processing of the green body part.

Following deposition of the layer 122 of particulate matter 124 and printing of the binder solution 136 as set forth in blocks 102 and 104 of FIG. 1, the method 100 continues at block 106 with curing the binder solution 136 to form a green body part. For example, the binder solution 136 may be a mixture of a binder (e.g., a thermoplastic binder) and a solvent. While a portion of the solvent in the binder solution 136 may be evaporated during deposition (e.g., printing) of the binder solution 136, a certain amount of the solvent may remain within the layer 122 of the particulate material 124. Therefore, in embodiments, the binder solution 136 may be thermally cured at a temperature that is suitable for evaporating the solvent remaining in the printed layer 156 and allowing efficient bonding of the printed layers 156, thereby forming the green body part. Heat may be applied to the printed part using an IR lamp and/or heated plate (e.g., on-machine), or may be carried out by placing the printed part in an oven (e.g., off-machine). In embodiments, curing the binder solution 136 on-machine comprises heating the printed layers 156 at a temperature greater than or equal to 25 °C and less than or equal to 100 °C, greater than or equal to 30 °C and less than or equal to 90 °C, greater than or equal to 35 °C and less than or equal to 80 °C, or even greater than or equal to 40 °C and less than or equal to 70 °C, or any and all sub-ranges formed from any of these endpoints. In embodiments, temperature ranges for heating the printed layer 156 on-machine may differ from off-machine temperature ranges.

Unbound particles of particulate matter 124 from the powder layer (e.g., the particulate material 124 that is not bonded by the binder solution 136) may be removed after curing to prepare the green body part for post-printing steps, such as debinding and sintering.

After curing, the green body part may undergo an optional drying step (not shown) to remove any residual solvent and/or other volatile materials that may remain in the green body part. For example, the green body part may be dried in a vacuum, under an inert atmosphere (e.g., nitrogen (N₂), or argon (Ar)) or air at slightly elevated or room temperatures.

The method 100 may repeat the acts of blocks 102, 104, and 106 to continue building up the part in a layer-by-layer manner until a green body part having desired number of printed layers 156 is formed.

Referring back to FIG. 1, following the curing of the binder solution 136 to form the green body part, the method 100 continues at block 108 with positioning the green body part on an additive manufacturing support. During debinding and sintering, the green or brown body part is placed in a chamber and heated to temperatures that are sufficient to remove the binder from the green body part or sinter the particular material of the brown body part. During debinding and sintering, the green or brown body part will shrink in size. As the green or brown body part shrinks, friction occurs between the green or brown body part and any surface of the chamber on which the green or brown body part rests. This friction may cause deformation of the green or brown body part as it shrinks. In some instances, the friction may cause damage, such as cracking, in the final consolidated part. In addition to the frictional forces that may cause deformation or damage to the green or brown body part, localized hot spots may form where the green or brown body part contacts a surface of the chamber. These localized hot spots may cause portions of the green or brown body part to shrink faster than adjacent portions of the green or brown body part during debinding or sintering. The faster rate of shrinkage may likewise cause deformation or damage to the green or brown body part.

To address the above issues, the green or brown body part may be placed on a setter made from a metal and ceramic assembly during debinding and/or sintering, and the setter is placed in the chamber such that the setter is positioned between the green or brown body part and the surface of the chamber. However, even when a setter is used, friction between the setter and the green or brown body part may still be present during debinding and sintering, causing deformation and damage to the part.

To address these concerns, embodiments of methods of additively manufacturing a part disclosed and described herein include positioning the green body part on an additive manufacturing support. The additive manufacturing supports may be designed to reduce friction and allow for movement of the green or brown body part during debinding or sintering, which reduces the stresses that may lead to deformation and damage of the part. The additive manufacturing support may also provide support to the green or brown body part during debinding or sintering, which may further reduce deformation or damage of the part. The additive manufacturing supports, or parts thereof, may be removed prior to, during, or after debinding and/or sintering.

Referring now to FIG. 6, a green body part 200a is shown positioned on an additive manufacturing support 202a. The additive manufacturing support 202a comprises a wax form 204a and at least one ceramic support embedded in the wax form 204a. By way of a non-limiting example, the wax form 204a is illustrated as a wax plate and a plurality of ceramic supports 206a are illustrated as being embedded therein. In this manner, it will be understood that structure, properties, and function discussed herein with respect to a plurality of ceramic supports may similarly apply with respect to at least one ceramic support and/or each of the plurality of ceramic supports, and vice versa. At least portions of the green body part 200a or brown body part are in contact with the plurality of ceramic supports 206a during debinding or sintering.

The wax form 204a comprises a first surface 208a and a second surface 210a that is opposite the first surface 208a. The wax form 204a holds the plurality of ceramic supports 206a prior to sintering. In particular, the wax form 204a restrains the plurality of ceramic supports 206a while the green body part 200a is being positioned in a chamber (not shown). The use of the wax form 204a to restrain the plurality of ceramic supports 206a simplifies the debinding and sintering steps, making the steps more repeatable and providing for improved part quality.

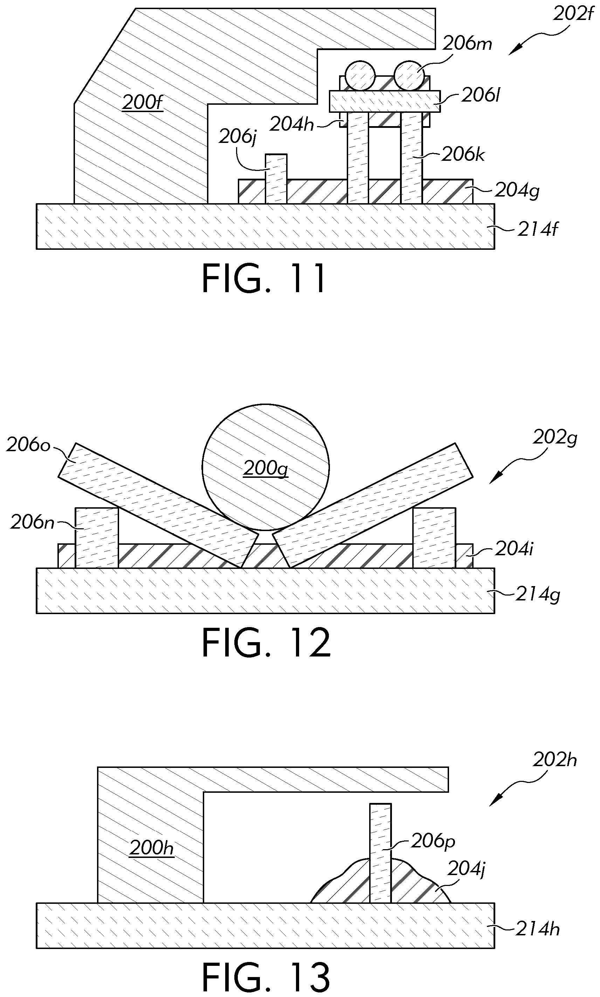

The wax form 204a may have any suitable shape that restrains the at least one ceramic support. For example, the wax form 204a may have a geometric shape (e.g., circular, triangular, rectangular, trapezoidal), such as a rectangular shape (e.g., plate) as shown in FIG. 6. In other embodiments, the wax form 204j may have an amorphous shape as shown in FIG. 13.

The wax form 204a may be sufficiently stiff, but malleable at room temperature to at least partially restrain the at least one ceramic support. Accordingly, in embodiments, the wax form 204a may comprise a melting point greater than or equal to 40 °C. In embodiments, the wax form 204a may comprise a melting point greater than or equal to 40 °C, greater than or equal to 60 °C, greater than or equal to 80 °C, or even greater than or equal to 100 °C. In embodiments, the wax form 204a may comprise a melting point less than or equal to 200 °C, less than or equal to 175 °C, less than or equal to 150 °C, or even less than or equal to 125 °C. In embodiments, the wax form 204a may comprise a melting point greater than or equal to 40 °C and less than or equal to 200 °C, greater than or equal to 40 °C and less than or equal to 175 °C, greater than or equal to 40 °C and less than or equal to 150 °C, greater than or equal to 40 °C and less than or equal to 125 °C, greater than or equal to 60 °C and less than or equal to 200 °C, greater than or equal to 60 °C and less than or equal to 175 °C, greater than or equal to 60 °C and less than or equal to 150 °C, greater than or equal to 60 °C and less than or equal to 125 °C, greater than or equal to 80 °C and less than or equal to 200 °C, greater than or equal to 80 °C and less than or equal to 175 °C, greater than or equal to 80 °C and less than or equal to 150 °C, greater than or equal to 80 °C and less than or equal to 125 °C, greater than or equal to 100 °C and less than or equal to 200 °C, greater than or equal to 100 °C and less than or equal to 175 °C, greater than or equal to 100 °C and less than or equal to 150 °C, or even greater than or equal to 100 °C and less than or equal to 125 °C, or any and all sub-ranges formed from any of these endpoints.

The wax form 204a may be vaporized (i.e., removed) prior to or during debinding or prior to or during sintering. Accordingly, the wax form 204a may have a boiling point less than or equal to 400 °C, less than or equal to 350 °C, or even less than or equal to 300 °C.

In embodiments, the wax form 204a may comprise sheet wax (e.g., HT260), paraffin wax, or a combination thereof.

The wax form 204a may have any suitable thickness that restrains the at least one ceramic support. In embodiments, the plurality of ceramic supports 206a may have a spherical shape as discussed herein, and the wax form 204a may have a thickness greater than or equal to half a diameter of each of the plurality of ceramic supports 206a. In embodiments, the wax form 204a may have a thickness greater than or equal to 1 mm and less than or equal to 20 mm. In embodiments, the wax form 204a may have a thickness greater than or equal to 1 mm, greater than or equal to 5 mm, or even greater than or equal to 10 mm. In embodiments, the wax form 204a may have a thickness less than or equal to 20 mm, less than or equal to 15 mm, less than or equal to 10 mm, or even less than or equal to 5 mm. In embodiments, the wax form 204a may have a thickness greater than or equal to 1 mm and less than or equal to 20 mm, greater than or equal to 1 mm and less than or equal to 15 mm, greater than or equal to 1 mm and less than or equal to 10 mm, greater than or equal to 1 mm and less than or equal to 5 mm, greater than or equal to 5 mm and less than or equal to 20 mm, greater than or equal to 5 mm and less than or equal to 15 mm, greater than or equal to 5 mm and less than or equal to 10 mm, greater than or equal to 10 mm and less than or equal to 20 mm, or even greater than or equal to 10 mm and less than or equal to 15 mm, or any and all sub-ranges formed from any of these endpoints.

The plurality of ceramic supports 206a may reduce friction and allow for movement (e.g., rolling) of the portions of the green body part 200a or brown body part in contact therewith. As such, during debinding and/or sintering, the green body part 200a or brown body part may move with or across the plurality of ceramic supports 206a as the part is shrinking, thereby reducing deformation or damage to the part. Moreover, the plurality of ceramic supports 206a may support the part during debinding or sintering, thereby reducing deformation or damage of the green body part 200a or brown body part.

In embodiments, at least one of the plurality of ceramic supports 206a may protrude (i.e., extend beyond) from at least one of the first surface 208a or the second surface 210a of the wax form 204a. In embodiments, at least one of the plurality of ceramic supports 206a may protrude from both the first surface 208a and the second surface 210a. Such protrusion allows for the plurality of ceramic supports 206a to contact the green body part 200a or brown body part and allow for movement and/or support of the part, with limited to no deformation thereof.

Referring back to FIG. 6, in embodiments, the wax form 204a may comprise at least one aperture within which at least one of the plurality of ceramic supports 206a are disposed. By way of non-limiting example, the wax form 204a includes a plurality of apertures 212a. The plurality of apertures 212a may be designed such that at least one of the plurality of ceramic supports 206a is moveable within a respective aperture of the plurality of apertures 212a. For example, at least one of the plurality of ceramic supports 206a may roll within the aperture as the green body part 200a or brown body part in contact therewith shrinks. Such movement of the ceramic supports 206a within the apertures 212a may allow for movement of the part during shrinkage.

Each of the plurality of ceramic supports 206a may be any suitable shape and size that allows for movement of and/or supports the portions of the green body part 200a or brown body part in contact therewith during debinding or sintering. For example, in embodiments, each of the plurality of ceramic supports 206a may comprise a spherical shape, as shown in FIG. 6, or a rectangular shape, as described herein. Spherical and/or rectangular ceramic supports may allow for movement of and/or support the part during debinding or sintering.

In embodiments, at least one of the plurality of ceramic supports 206a may comprise a spherical shape and the at least one of the plurality of ceramic supports 206a may comprise a diameter greater than or equal to 1 mm and less than or equal to 10 mm, greater than or equal to 1 mm and less than or equal to 5 mm, greater than or equal to 3 mm and less than or equal to 10 mm, or even greater than or equal to 3 mm and less than or equal to 5 mm, or any and all sub-ranges formed from any of these endpoints.

In embodiments, the at least one ceramic support may comprise a rectangular shape and the least one support may comprise a thickness greater than or equal to 1 mm and less than or equal to 30 mm, greater than or equal to 1 mm and less than or equal to 20 mm, greater than or equal to 1 mm and less than or equal to 10 mm, greater than or equal to 5 mm and less than or equal to 30 mm, greater than or equal to 5 mm and less than or equal to 20 mm, greater than or equal to 5 mm and less than or equal to 10 mm, greater than or equal to 10 mm and less than or equal to 30 mm, or even greater than or equal to 10 mm and less than or equal to 20 mm, or any and all sub-ranges formed from any of these endpoints, and a length greater than or equal to 1 mm and less than or equal to 20 mm, greater than or equal to 1 mm and less than or equal to 10 mm, greater than or equal to 5 mm and less than or equal to 20 mm, or even greater than or equal to 5 mm and less than or equal to 10 mm, or any and all sub-ranges formed from any of these endpoints.

In embodiments, each of the plurality of ceramic supports 206a may comprise alumina, aluminum nitride, zirconia, titania, silica, silicon nitride, silicon carbide, boron nitride, or a combination thereof.

In embodiments, the green body part 200a may comprise a coating. As shown in FIG. 6 and as described herein, the plurality of ceramic supports 206a may contact the green body part 200a or brown body part during debinding and/or sintering. A coating (not shown) disposed on the green body part 200a may reduce friction and allow for movement of the part in contact with the plurality of ceramic supports 206a. Moreover, during sintering, a portion of the brown body part in contact with the plurality of ceramic supports 206a may sinter and bond to the plurality of ceramic supports 206a. The coating (not shown) disposed on the green body part 200a may prevent such bonding or may help with removing the plurality of ceramic supports 206a from the consolidated part after the sintering, as described herein. In embodiments, the coating may comprise zirconia, hexagonal boron nitride, or a combination thereof.

Referring back to FIG. 6, in embodiments, the additive manufacturing support 202a may further comprise a ceramic base plate 214a. The wax form 204a and the plurality of ceramic supports 206a may be supported on the ceramic base plate 214a.

Referring now to FIGS. 7-13, other embodiments of the additive manufacturing support are shown. The embodiments shown in FIGs. 7-13 are not mutually exclusive and a component from an embodiment in one figure may be utilized with a component from another embodiment in another figure.

Referring to FIG. 7, a green body part 200b is positioned on an additive manufacturing support 202b supported on a ceramic base plate 214b. The additive manufacturing support 202b comprises a wax form 204b and a plurality of ceramic supports 206b embedded in the wax form 204b. The wax form 204b is illustrated as a wax plate. The plurality of ceramic supports 206b comprise a spherical shape. The additive manufacturing support 202b further comprises a ceramic skater 216b disposed on at least a portion of the plurality of ceramic supports 206b. The ceramic skater 216b may move (e.g., roll) with respect to the plurality of ceramic supports 206b and allow for movement (e.g., rolling) of portions of the green body part 200a or brown body part in contact therewith during debinding or sintering. The ceramic skater 216b may be removed from the consolidated part after sintering, as described herein. In this manner, it will be understood that an interim body can be located between the green body part 200b and the additive manufacturing support 202b.

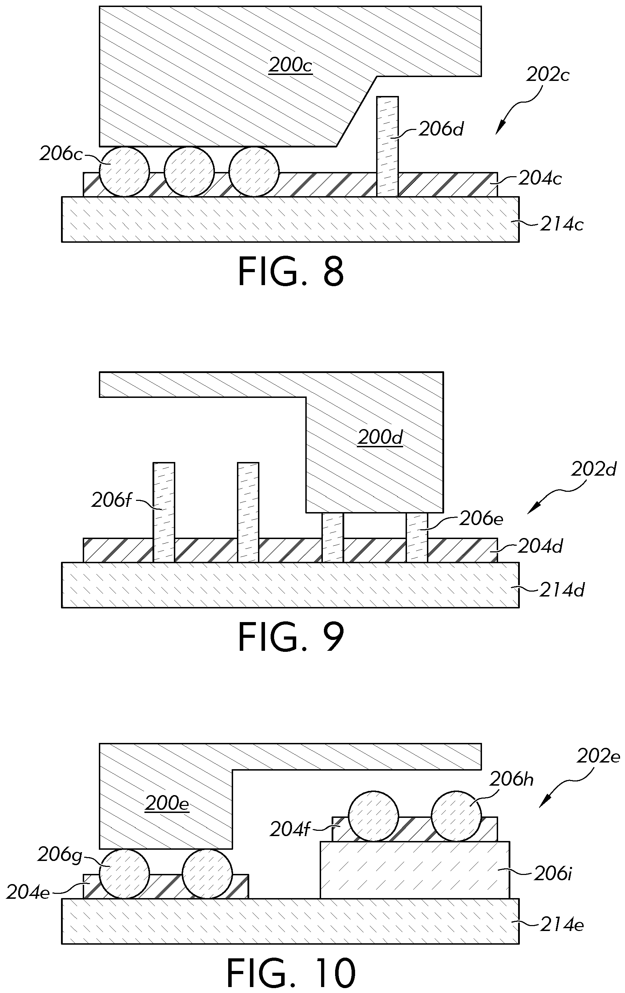

Referring to FIG. 8, a green body part 200c is positioned on an additive manufacturing support 202c supported on a ceramic base plate 214c. The additive manufacturing support 202c comprises a wax form 204c and a plurality of ceramic supports 206c, 206d embedded in the wax form 204c. The wax form 204c is illustrated as a wax plate. The plurality of ceramic supports 206c, 206d comprise spherical ceramic supports 206c and a rectangular ceramic support 206d. The spherical ceramic supports 206c contact the green body part 200c and allow for movement and/or support of the green body part 200a or the brown body part during debinding or sintering. The rectangular ceramic support 206d may provide support of the green body part 200a or the brown body part during debinding or sintering as the part shrinks and eventually contacts the rectangular ceramic support 206d. In this manner, it may be understood that the green body part 200c may not initially rest on all of the plurality of ceramic supports within the the additive manufacturing support 202c.

Referring to FIG. 9, a green body part 200d is positioned on an additive manufacturing support 202d supported on a ceramic base plate 214d. The additive manufacturing support 202d comprises a wax form 204d and a plurality of ceramic supports 206e, 206f embedded in the wax form 204d. The wax form 204d is illustrated as a wax plate. The plurality of ceramic supports 206e, 206f comprise a rectangular shape and have differing sizes. The rectangular ceramic supports 206e contact and provide support of the green body part 200d or the brown body part during debinding or sintering. The rectangular ceramic supports 206f may provide support of the green body part 200d or the brown body part during debinding or sintering as the part shrinks and eventually contacts the rectangular ceramic supports 206f.

Referring to FIG. 10, a green body part 200e is positioned on an additive manufacturing support 202e supported on a ceramic base plate 214e. The additive manufacturing support 202e comprises a wax form 204e, 204f and a plurality of ceramic supports 206g, 206h embedded in the wax form 204e, 204f. Wax forms 204e, 204f are illustrated as wax plates. The plurality of ceramic supports 206g, 206h, 206i comprise spherical ceramic supports 206g, 206h and a rectangular ceramic support 206i. In embodiments, as shown in FIG. 10, the additive manufacturing support 202e may include a ceramic support not embedded in the wax, such as rectangular ceramic support 206i. The spherical ceramic supports 206g are embedded in the wax form 204e and contact the green body part 200e and allow for movement and/or support of the green body part 200e or the brown body part during debinding or sintering. The spherical ceramic supports 206h are embedded in the wax form 204f, which are disposed on rectangular ceramic support 206i. The spherical ceramic supports 206h, with the support of rectangular ceramic support 206i, may allow for movement and/or provide support to the green body part 200e or brown body part during debinding or sintering as the part shrinks and eventually contacts the spherical ceramic supports 206h.

Referring to FIG. 11, a green body part 200f is positioned on an additive manufacturing support 202f supported on a ceramic base plate 214f. The additive manufacturing support 202f comprises a wax form 204g, 204h and a plurality of ceramic supports 206j, 206k, 2061, 206m embedded in the wax form 204g, 204h. Wax forms 204g, 204h are illustrated as wax plates. The plurality of ceramic supports 206j, 206k, 2061, 206m comprise rectangular ceramic supports 206j, 206k, 2061 and spherical ceramic supports 206m. Rectangular ceramic support 206j is embedded in the wax form 204g and may support the green body part 200f or the brown body part during debinding or sintering as the part shrinks and eventually contacts the rectangular ceramic support 206j. Rectangular ceramic supports 206k are embedded in wax forms 204g and 204h. Rectangular ceramic support 206l and spherical ceramic supports 206m are embedded in the wax form 204h and disposed on rectangular ceramic supports 204k. Spherical ceramic supports 206m may contact the green body part 200f or brown body part and allow for movement and/or provide support to the part during debinding or sintering as the part shrinks and eventually contacts the spherical ceramic supports 206m.

Referring to FIG. 12, a green body part 200g is positioned on an additive manufacturing support 202g supported on a ceramic base plate 214g. The additive manufacturing support 202g comprises a wax form 204i and a plurality of ceramic supports 206n, 206o embedded in the wax form 204i. The wax form 204i is illustrated as a wax plate. The plurality of ceramic supports 206n, 206o comprise a rectangular shape. The rectangular ceramic supports 206o are angularly disposed on rectangular ceramic supports 206n. The rectangular ceramic supports 206o contact and allow for movement and/or support green body part 200g or brown body part during debinding or sintering.

Referring now to FIG. 13, a green body part 200h is positioned on an additive manufacturing support 202h supported on a ceramic base plate 214h. The additive manufacturing support 202h comprises a wax form 204j and a ceramic support 206p embedded in the wax form 204j. The wax form 204j is illustrated as having an amorphous shape. The ceramic support 206p comprises a rectangular shape. The rectangular ceramic support 206p may provide support of the green body part 200d or the brown body part during debinding or sintering as the part shrinks and eventually contacts the rectangular ceramic support 206f. In embodiments, as shown in FIG. 13, a portion of the green body part 200h may contact the ceramic base plate 214h. In this manner, it will be understood that the additive manufacturing support 202h may be designed to reduce friction and allow for movement of a portion of the green body part 200h or brown body part.

As exemplified by the various embodiments of the additive manufacturing supports shown and described herein, the additive manufacturing support may have any suitable size, shape, and/or arrangement to allow for movement of and/or support the part during debinding or sintering, which may be determined by a shape, a size, and/or shrinking properties of the part.

Referring back to FIG. 1, following the positioning of the green body part on the additive manufacturing support, the method 100 continues at block 110 with heating the green body part above a first temperature to remove at least a portion of the binder, thereby forming a brown body part. As discussed above, the binders used in binder jetting applications provide strength (e.g., green strength) to the printed article. Therefore, as mentioned, it may be desirable to remove only a portion (i.e., not all) of the binder during debinding of the green body part to improve the handling strength of the resulting brown body part before sintering.

The first temperature may be high enough (e.g., greater than or equal to 250 °C) to ensure removal of at least a portion of the binder. The first temperature may be limited (e.g., less than or equal to 500 °C) should sintering and vaporization of the wax form during debinding be undesirable in a given application. Accordingly, in embodiments, the first temperature may be greater than or equal to 250 °C and less than or equal to 500 °C. In embodiments, the first temperature may be greater than or equal to 250 °C, greater than or equal to 300 °C, or even greater than or equal to 350 °C. In embodiments, the first temperature may be less than or equal to 500 °C or even less than or equal to 450 °C. In embodiments, the first temperature may be greater than or equal to 250 °C and less than or equal to 500 °C, greater than or equal to 250 °C and less than or equal to 450 °C, greater than or equal to 300 °C and less than or equal to 500 °C, greater than or equal to 300 °C and less than or equal to 450 °C, greater than or equal to 350 °C and less than or equal to 500 °C, or even greater than or equal to 350 °C and less than or equal to 450 °C, or any and all sub-ranges formed from any of these endpoints.

In embodiments, heating the green body part above a first temperature may include heating the green body part in an oxygen-free environment (e.g., in a vacuum chamber/inert atmosphere). In embodiments, debinding may be performed under nitrogen (N₂), argon (Ar), another inert gas, under vacuum, or combinations thereof. In embodiments, the debinding may be performed in air or in any other environment suitable for the specific materials being processed.

Referring back to FIG. 1, the method 100 continues at block 112 with heating the brown body part above a second temperature to sinter the particulate material, thereby forming a consolidated part. In embodiments, the second temperature may be greater than or equal to the temperature at which the particulate material sinters. In embodiments, the second temperature may be greater than or equal to 600 °C and less than or equal to 3000 °C. In embodiments, the second temperature may be greater than or equal to 600 °C, greater than or equal to 900 °C, or even greater than or equal to 1200 °C. In embodiments, the second temperature may be less than or equal to 3000 °C, less than or equal to 2500 °C, less than or equal to 2000 °C, or even less than or equal to 1500 °C. In embodiments, the second temperature may be greater than or equal to 600 °C and less than or equal to 3000 °C, greater than or equal to 600 °C and less than or equal to 2500 °C, greater than or equal to 600 °C and less than or equal to 2000 °C, greater than or equal to 600 °C and less than or equal to 1500 °C, greater than or equal to 900 °C and less than or equal to 3000 °C, greater than or equal to 900 °C and less than or equal to 2500 °C, greater than or equal to 900 °C and less than or equal to 2000 °C, greater than or equal to 900 °C and less than or equal to 1500 °C, greater than or equal to 1200 °C and less than or equal to 3000 °C, greater than or equal to 1200 °C and less than or equal to 2500 °C, greater than or equal to 1200 °C and less than or equal to 2000 °C, or even greater than or equal to 1200 °C and less than or equal to 1500 °C, or any and all sub-ranges formed from any of these endpoints.

In embodiments, the debinding of block 110 and the sintering of block 112 illustrated in FIG. 1 may occur in a single step.

As discussed herein, the wax form may be vaporized (i.e., removed) prior to or during debinding or prior to or during sintering. As mentioned herein, during sintering, ceramic supports in contact with the brown body part may partially sinter and bond to the consolidated part. As such, referring back to FIG. 1, in embodiments, the method 100 may optionally continue at block 114 with, after the sintering, removing the plurality of ceramic supports from the consolidated part. The ceramic supports may be removed by any suitable method such as removing the ceramic supports with a chemical solvent or mechanical methods, such as machining and grinding. In embodiments, the ceramic supports may be removed from the consolidated part by breaking the ceramic supports from the part followed by any necessary finishing, such as grinding and polishing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Clause 1 is an additive manufacturing support comprising: a wax form comprising a first surface and a second surface that is opposite the first surface; and at least one ceramic support embedded in the wax form.

Clause 2 the additive manufacturing support of any preceding clause, wherein the at least one ceramic support protrudes from at least one of the first surface or the second surface of the wax form.

Clause 3 includes the additive manufacturing support of any preceding clause, wherein at least one of ceramic support protrudes from both the first surface and the second surface of the wax form.

Clause 4 includes the additive manufacturing support of any preceding clause, wherein the wax form comprises at least one aperture within which the at least one ceramic support is disposed.

Clause 5 includes the additive manufacturing support of any preceding clause, wherein at least one ceramic support is moveable within the at least one aperture.

Clause 6 includes the additive manufacturing support of any preceding clause, wherein the at least one ceramic support comprises a spherical shape or a rectangular shape.

Clause 7 includes the additive manufacturing support of any preceding clause, wherein the at least one ceramic support comprises a plurality of ceramic supports.

Clause 8 includes the additive manufacturing support of any preceding clause, wherein the additive manufacturing support further comprises a ceramic skater disposed on at least a portion of the at least one ceramic support.

Clause 9 includes the additive manufacturing support of any preceding clause, wherein the wax form comprises a melting point greater than or equal to 40 °C.

Clause 10 includes the additive manufacturing support of any preceding clause, wherein the wax form comprises sheet wax, paraffin wax, or a combination thereof.

Claim 11 includes the additive manufacturing support of any preceding clause, wherein the wax form comprises a geometric shape or an amorphous shape.

Clause 12 includes the additive manufacturing support of any preceding clause, wherein the at least one ceramic support comprises alumina, aluminum nitride, zirconia, titania, silica, silicon nitride, silicon carbide, boron nitride, or a combination thereof.

Clause 13 includes the additive manufacturing support of any preceding clause, further comprising a ceramic base plate, wherein the wax form and the at least one ceramic support are supported on the ceramic base plate.

Clause 14 includes the additive manufacturing support of any preceding clause, wherein the wax form has a thickness greater than or equal to 1 mm and less than or equal to 20 mm.

Clause 15 is a method of additively manufacturing a part utilizing the additive manufacturing support of any preceding clause, the method comprising: forming a green body part by: depositing a layer of particulate material on a working surface; selectively applying a binder solution to the layer of the particulate material, the binder solution comprising a binder and a solvent; and curing the binder solution in the layer of the particulate material to evaporate the solvent; positioning the green body part on the additive manufacturing support; heating the green body part above a first temperature to remove the binder, thereby forming a brown body part; and heating the brown body part above a second temperature to sinter the particulate material, thereby forming a consolidated part, wherein the wax form is removed prior to or during heating the green body part or prior to or during heating the brown body part; and wherein the at least one ceramic support is configured to reduce deformation of the part.

Clause 16 includes the method of any preceding clause, wherein the additive manufacturing support further comprises a ceramic base plate and wherein the wax form and the at least one ceramic support are supported on the ceramic base plate.

Clause 17 includes the method of any preceding clause, wherein the green body part comprises a coating, the coating comprising zirconia, hexagonal boron nitride, or a combination thereof.

Clause 18 includes the method of any preceding clause, wherein the method further comprises, after the sintering, removing the at least one ceramic support from the consolidated part.

Clause 19 includes the method of any preceding clause, wherein the removing the at least one ceramic support comprises grinding, cutting, or breaking the at least one ceramic support from the consolidated part.

Clause 20 includes the method of any preceding clause, wherein the method further comprises finishing a surface of the consolidated part from which the at least one ceramic support has been removed.

Clause 21 includes the method of any preceding clause, wherein the first temperature is greater than or equal to 250 °C and less than or equal to 500 °C.

Clause 22 includes the method of any preceding clause, wherein the second temperature is greater than or equal to 600 °C and less than or equal to 3000 °C.

Clause 23 includes the method of any preceding clause, wherein the particulate material comprises a ceramic particulate material, the ceramic particulate material comprising alumina, aluminum nitride, zirconia, titania, silica, silicon nitride, silicon carbide, boron nitride, or a combination thereof.

Clause 24 includes the method of any preceding clause, wherein the particulate material comprises a metal particulate material, the metal particulate material comprising a nickel alloy, a cobalt alloy, a cobalt-chromium alloy, a titanium alloy, an aluminum alloy, a tungsten alloy, a stainless steel alloy, copper, a copper-nickel alloy, or a combination thereof.

## Claims

1. An additive manufacturing support (202a) comprising:
a wax form (204a) comprising a first surface (208a) and a second surface (210a) that is opposite the first surface (208a); and
at least one ceramic support (206a) embedded in the wax form (204a).

2. The additive manufacturing support (202a) of claim 1, wherein the at least one ceramic support (206a) protrudes from at least one of the first surface (208a) or the second surface (210a) of the wax form (204a).

3. The additive manufacturing support (202a) of claim 1 or claim 2, wherein the wax form (204a) comprises at least one aperture (212a) within which the at least one ceramic support (206a) is disposed.

4. The additive manufacturing support (202a) of claim 3, wherein the at least one ceramic support (206a) is moveable within the at least one aperture (212a).

5. The additive manufacturing support (202a) of any one of claims 1 to 4, wherein the at least one ceramic support (206a) comprises a spherical shape or a rectangular shape.

6. The additive manufacturing support (202a) of claim 5, wherein the additive manufacturing support (202a) further comprises a ceramic skater (216b) disposed on at least a portion of the at least one ceramic support (206a).

7. The additive manufacturing support (202a) of any one of claims 1 to 6, wherein the wax form (204a) comprises a melting point greater than or equal to 40 °C.

8. The additive manufacturing support (202a) of any one of claims 1 to 7, wherein the wax form (204a) comprises sheet wax, paraffin wax, or a combination thereof.

9. The additive manufacturing support (202a) of any one of claims 1 to 8, wherein the at least one ceramic support (206a) comprises alumina, aluminum nitride, zirconia, titania, silica, silicon nitride, silicon carbide, boron nitride, or a combination thereof.

10. The additive manufacturing support (202a) of any one of claims 1 to 9, further comprising a ceramic base plate (214a)and wherein the wax form (204a) and the at least one ceramic support (206a) are supported on the ceramic base plate (214a).

11. A method of additively manufacturing a part (100) utilizing the additive manufacturing support of any one of claims 1 to 10, the method (100) comprising:
forming a green body part (200a) by:
depositing a layer (122) of particulate material (124) on a working surface (132);
selectively applying a binder solution to the layer (122) of the particulate material (124), the binder solution (136) comprising a binder and a solvent; and
curing the binder solution (136) in the layer (122) of the particular material (124) to evaporate the solvent;
positioning the green body part (200a) on the additive manufacturing support (202a);
heating the green body part (200a) above a first temperature to remove the binder, thereby forming a brown body part; and
heating the brown body part above a second temperature to sinter the particulate material (124), thereby forming a consolidated part.

12. The method of claim 11, wherein the green body part (200a) comprises a coating, the coating comprising zirconia, hexagonal born nitride, or a combination thereof.

13. The method of claim 11 or claim 12, wherein the method further comprises, after the sintering, removing the at least one ceramic support (206a) from the consolidated part, the removing comprising grinding, cutting, or breaking the at least one ceramic support (206a) from the consolidated part.

14. The method of claim 13, wherein the method further comprises finishing a surface of the consolidated part from which the at least one ceramic support (206a) has been removed.

15. The method of any one of claims 11 to 14, wherein the first temperature is greater than or equal to 250 °C and less than or equal to 500 °C, and wherein the second temperature is greater than or equal to 600 °C and less than or equal to 3000 °C.
